(19) Europäisches Patentamt

European Patent Office

Office européen des brevets

(11) **EP 0 604 303 B1**

(12) **FASCICULE DE BREVET EUROPEEN**

(45) Date de publication et mention
de la délivrance du brevet:
**26.01.2000 Bulletin 2000/04**

(51) Int. Cl.[7]: **G02F 1/39**

(21) Numéro de dépôt: **93403114.7**

(22) Date de dépôt: **21.12.1993**

(54) **Source cohérente optique à émission accordable**

Kohärente optische Quelle mit durchstimmbarer Emission

Coherent optical source with tunable emission

(84) Etats contractants désignés:
**DE GB IT**

(30) Priorité: **22.12.1992 FR 9215471**

(43) Date de publication de la demande:
**29.06.1994 Bulletin 1994/26**

(73) Titulaire: **THOMSON-CSF
75008 Paris (FR)**

(72) Inventeurs:
• **Papuchon, Michel
F-92402 Courbevoie Cedex (FR)**
• **Pocholle, Jean-Paul
F-92402 Courbevoie Cedex (FR)**

• **Delacourt, Dominique
F-92402 Courbevoie Cedex (FR)**

(74) Mandataire: **Guérin, Michel et al
Thomson-CSF Propriété Intellectuelle,
13, Avenue du Président Salvador Allende
94117 Arcueil Cédex (FR)**

(56) Documents cités:
**EP-A- 0 411 942        GB-A- 1 254 617
US-A- 3 619 796        US-A- 4 189 652**

• **IEEE JOURNAL OF QUANTUM ELECTRONICS.,
vol.QE-21, no.8, Août 1985, NEW YORK US
pages 1286 - 1295 J. ZYSS ET AL. 'Optical
parametric interactions in 3-methyl-4-
nitropyridine- 1-oxide (POM) single crystals'**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

Le domaine de l'invention est celui des sources optiques de puissance dont la fréquence est accordable et qui exploitent la non-linéarité optique d'ordre 2 de certains matériaux.

Plus précisément, on utilise des lasers solides qui actuellement avec le développement du pompage résonnant par diodes lasers, bénéficient d'un regain d'intérêt. En couplant les lasers solides avec des matériaux non linéaires optiquement, il est possible de réaliser des sources optiques de puissance continûment accordables sur un large domaine spectral. En effet, on est capable de générer de nouvelles fréquences à partir d'une onde optique tout en présentant une accordabilité sur un grand domaine spectral. Cet effet est fondé sur le mécanisme d'amplification paramétrique. Ce mécanisme exploite la non-linéarité du second ordre d'un matériau. En présence de deux ondes composées d'une onde signal de fréquence angulaire $\omega s$ de faible puissance et d'une onde de pompe $\omega p$ de forte puissance, le terme quadratique contribue à ce qu'elles battent entre elles pour produire une nouvelle onde dite "oisive" à la fréquence angulaire $\omega i = \omega p - \omega s$. Cette interaction entre trois ondes se traduit donc par un prélèvement d'énergie de l'onde de pompe qui contribue à amplifier l'onde signal et à faire apparaître une onde "oisive".

Ce transfert d'énergie est d'autant plus efficace que la condition d'accord de phase est respectée. Cette condition est représentée par l'équation suivante :

$$K(\omega p) = K(\omega s) + K(\omega i) \qquad (A)$$

ou $n_{\omega p}.\omega p = n_{\omega s}\,\omega_s + n_{\omega i}\omega i$ (quand tous les vecteurs d'ondes sont parallèles) où $K(\omega p)$, $K(\omega s)$, $K(\omega i)$ sont les vecteurs d'ondes des ondes optiques en interaction, $n_{\omega p}$, $n_{\omega s}$ et $n_{\omega i}$ sont les indices optiques du matériau non linéaire aux fréquences $\omega_p, \omega_s$ et $\omega_i$.

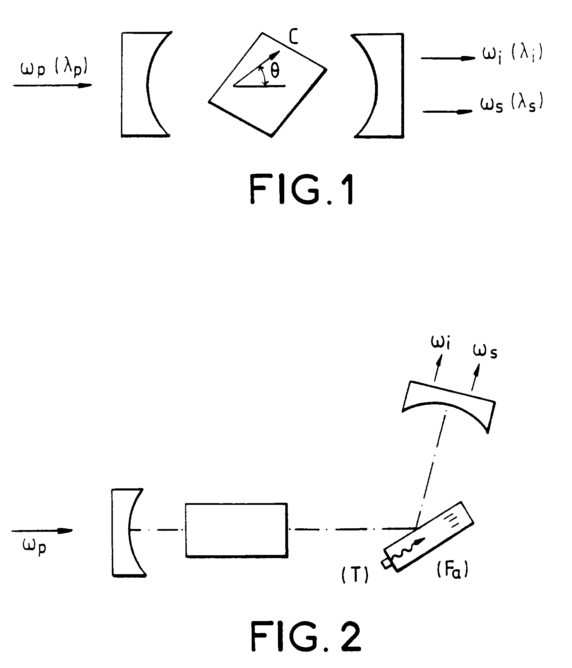

Selon un principe analogue il est également possible de réaliser un oscillateur paramétrique optique. De manière générale, un oscillateur est constitué d'un amplificateur et d'un circuit résonnant. Généralement, le gain de l'amplificateur est constant sur une large gamme alors que la réaction du circuit résonnant est sélective et détermine la fréquence d'oscillation. En optique non linéaire, un tel dispositif est constitué d'une source de pompe intense et de courte longueur d'onde (par rapport aux ondes générées dans l'interaction non linéaire) qui excite généralement un cristal placé dans une cavité résonnante, cette dernière introduisant la contre-réaction nécessaire à l'entretien d'une oscillation. Comme dans un laser, l'émission n'a lieu que lorsque l'intensité de pompe dépasse un seuil. L'oscillation se produit simultanément sur deux fréquences (onde signal et onde "oisive") dont la somme est égale à la fréquence de pompe. L'amplitude de ces ondes est déterminée par une seconde condition représentée par la conservation des vecteurs d'ondes durant l'interaction c'est-à-dire par l'équation (A) citée précédemment. On est actuellement en mesure de contrôler cette condition en ajustant l'adaptation de phase entre les trois champs (pompe, signal et "oisive") par rotation du cristal dans la cavité comme l'illustre la figure 1. Par exemple dans le niobate de lithium, et pour une onde de pompe $\lambda p = 1,06\ \mu m$ (polarisée "extraordinaire") et générant deux ondes signal et "oisive" (à $\lambda i$ et $\lambda s$ polarisées "ordinaire"), on peut ainsi en jouant sur la biréfringence du cristal, obtenir l'équation suivante :

$$ne_{\omega p}(\theta)/\lambda p = n_{o\omega i}/\lambda i + n_{o\omega s}/\lambda s$$

$n_{e\omega p}(\theta)$ étant l'indice optique extraordinaire du cristal à la fréquence $\omega p$ pour un angle $\theta$ représentant l'angle de propagation de l'onde de pompe par rapport à l'axe optique du cristal $n_{o\omega i}$ étant l'indice ordinaire du cristal à la fréquence $\omega_i$ et $n_{o\omega s}$ étant l'indice ordinaire du cristal à la fréquence $\omega s$. Ainsi en pompant à $\lambda p = 1,06\ \mu m$ on est en mesure d'obtenir des ondes signal et "oisive" dont les longueurs d'onde varient entre 1,5 et 4,5 $\mu m$. Pour faire varier un couple ($\lambda i$, $\lambda s$) tout en conservant la condition d'accord de phase une solution consiste à modifier les indices de réfraction du matériau, par rotation du cristal comme notamment décrit dans le brevet US 4 189 652 qui mentionne des oscillateurs paramétriques optiques dont les longueurs d'onde d'émission varient par rotation du cristal.

Une autre possibilité pour obtenir la condition d'accord de phase nécessaire dans les amplificateurs paramétriques optiques ou dans les oscillateurs paramétriques optiques est d'utiliser une technique dite d'accord de phase artificiel ou "quasi accord de phase" dans laquelle un réseau de diffraction est généré dans le cristal sur ses propriétés linéaires (variation périodique de l'indice de réfraction) ou mieux sur ses propriétés optiques non linéaires (variation périodique de la susceptibilité non linéaire d'ordre 2) pour maximiser l'efficacité de l'interaction. Dans ce cas, le réseau induit une dispersion supplémentaire permettant d'obtenir l'équation :

$$\Delta K = \frac{2m\pi}{\Lambda} = K(\omega p) - K(\omega s) - K(\omega i)$$

(dans le cas où tous ces vecteurs d'ondes sont parallèles)
avec $\Lambda$ = pas du réseau; m = nombre entier
et permettant de compenser le désaccord de phase existant ($\Delta K$).

Il est possible, qu'il s'agisse de l'exploitation de la biréfringence d'un cristal ou de l'utilisation d'une structure réseau, d'obtenir la condition d'accord de phase pour un couple donné de longueurs d'onde ($\lambda$s, $\lambda$i). On peut alors par rotation du cristal, obtenir la condition d'accord de phase pour un nouveau couple de longueurs d'onde ($\lambda$s,$\lambda$i).

L'invention propose d'obtenir une interaction paramétrique à accord de phase élargi en ce qui concerne les fréquences signal et oisive générées et ce de manière complètement statique. Cela signifie que pour des conditions physiques fixées de l'interaction, plusieurs couples de longueurs d'onde signal et oisive satisfont aux conditions d'accord de phase. Les conditions physiques fixées de l'interaction peuvent être :

- soit la fixation d'un pas donné de réseau pour une longueur d'onde précise de pompe ;
- soit un angle $\theta$ fixe et une longueur d'onde de pompe adaptée ;
  ces conditions permettant l'accord de phase élargi à une gamme de couples ($\lambda$s, $\lambda$i).

Dans le cas d'un oscillateur paramétrique optique, ces différents couples peuvent être générés et un filtre accordable en fréquence peut être inséré dans la cavité de manière à sélectionner un couple particulier de fréquences. Dans le cas d'un amplificateur paramétrique il est possible d'amplifier une onde à une longueur d'onde particulière sous l'action d'un signal de faible amplitude à cette longueur d'onde.

Plus précisément, l'invention a pour objet un oscillateur paramétrique optique comprenant :

- une cavité résonnante,
- un milieu optiquement non-linéaire ayant un fort coefficient non-linéaire d'ordre deux, inséré dans ladite cavité résonnante et formant avec cette dernière une structure,
- des moyens pour illuminer cette structure par une onde de pompe de fréquence angulaire $\omega_p$, de manière à réaliser dans ledit milieu une interaction à trois ondes avec une onde de signal de fréquence angulaire $\omega_s$ et une onde oisive de fréquence angulaire $\omega_i$, les valeurs de fréquence angulaire étant liées par la relation $\omega_p = \omega_s + \omega_i$ ; et les vecteurs d'onde $K_p$, $K_s$ et $K_i$ respectivement associés à l'onde de pompe, à l'onde de signal et à l'onde oisive étant liés par la relation $K_p = K_s + K_i$ caractérisé en ce que
  ledit milieu non-linéaire est choisi et orienté par rapport à la direction de l'onde de pompe de façon à respecter pour l'onde de pompe de fréquence angulaire $\omega_p$ l'accord de phase pour une famille de couples d'ondes de signal et d'ondes oisives sur une gamme de longueurs d'onde émises d'une largeur supérieure à environ quelques microns; et
  en ce que l'oscillateur comprend en outre un moyen pour sélectionner une onde de signal d'une longueur d'onde parmi les longueurs d'onde de ladite famille.

Le matériau peut avantageusement être un cristal de niobate de lithium LiNbO3, il peut s'agir également d'un cristal de tantalate de lithium LiTaO3. Le domaine spectral obtenu avec de tels cristaux est typiquement voisin de 1-3 microns pour une longueur d'onde de pompe voisine de 1 micron. Pour accéder à des sources optiques cohérentes de grande puissance dans la gamme 4-16 microns on peut avantageusement réaliser un réseau d'arséniure de gallium dont le pas est de l'ordre de 140 microns, pompé par une onde de longueur voisine de 3 microns. Le moyen de sélection d'un couple précis de longueur d'onde peut être de disposer dans la cavité résonnante un filtre accordable en fréquence de type filtre acoustooptique ou cavité Fabry Perot à cristal liquide, ces types de filtres présentant l'intérêt d'être commandables électriquement et statiquement.

Le moyen de sélection d'une longueur d'onde émise peut également consister à injecter dans la cavité de l'oscillateur paramétrique optique, un signal de faible amplitude dont on sait faire varier la longueur d'onde émission, qui déclenchera l'oscillation sur la longueur d'onde injectée.

Le matériau non linéaire peut également avantageusement être un cristal de niobate de lithium dans lequel la structure est orientée à environ 45 degrés, la longueur d'onde de pompe étant voisine de 0,95 micron, la condition d'accord de phase est vérifiée pour l'ensemble des longueurs d'onde $\lambda$i et $\lambda$s appartenant au domaine spectral 1-2,5 microns.

L'invention a également pour objet un amplificateur paramétrique optique comme défini dans la revendication 2.

L'invention sera mieux comprise et d'autres avantages apparaîtront à la lecture de la description qui va suivre et des figures annexées parmi lesquelles:

- la figure 1 représente un schéma classique d'oscillateur paramétrique optique selon l'art antérieur;
- la figure 2 représente un schéma d'oscillateur paramétrique optique selon l'invention ;
- la figure 3 illustre un exemple de réseau de courbes obtenues avec une structure réseau inscrite dans un cristal LiNbO3 ;
- la figure 4 illustre un exemple de réseau de courbes obtenues avec un cristal LiNbO3 dont l'axe optique C fait un angle d'environ 45 degrés avec le vecteur d'onde de l'onde de pompe ;
- la figure 5 illustre un exemple de réseau de courbes obtenues avec une structure réseau inscrite dans un cristal LiTaO3 ;
- la figure 6 illustre un exemple de réseau de courbes obtenues avec une structure réseau réalisée avec du GaAs.

Un exemple d'oscillateur paramétrique optique selon l'invention est illustré à la figure 2. Dans cet exemple un cristal (K) est inséré dans une cavité résonnante constituée par deux miroirs M1 et M2 partiellement réfléchissants. Il s'agit de préférence de miroirs multidiélectriques capables de réfléchir sélectivement différentes longueurs d'onde. Il peut aussi s'agir de miroirs réalisés à partir de structures à multipuits quantiques.

Dans la cavité résonnante on insère un réseau acoustooptique dans lequel une onde acoustique se propage générant des variations périodiques d'indice de réfraction. Un transducteur accolé au réseau acoustooptique permet électriquement de changer la fréquence de l'onde acoustique et donc le pas dudit réseau. Cet ensemble constitue ainsi un filtre accordable en fréquence (Fa) et commandable électriquement. En effet en se plaçant dans des conditions telles que l'on puisse générer une famille de couples de longueurs d'ondes ($\lambda i$, $\lambda s$), il est possible par diffraction de sélectionner un couple particulier de ($\lambda i$, $\lambda s$). Pour sélectionner un autre couple, il suffit alors électriquement de faire varier le pas du réseau acoustooptique. Typiquement le réseau acoustooptique peut être réalisé au sein d'un matériau type cristal LiNbO3. Il est également possible de réaliser des structures réseau commandable électriquement grâce à l'emploi d'un cristal liquide cholestérique dont le pas de l'hélice varie sous l'action d'un champ électrique, les molécules devant être préalablement orientées de manière planaire par rapport aux parois de la cellule cristal liquide. En utilisant des cristaux liquides on peut également réaliser des cavités Fabry Perot d'épaisseur telle que seules certaines longueurs d'onde puissent résonner dans la cavité et ainsi être amplifiées en sortie. En commandant électriquement l'orientation des molécules dans la cellule constituant la cavité Fabry Perot on peut modifier la longueur d'onde sélectionnée.

Le cristal (K) présente une structure réseau de pas $\Lambda$ tel qu'on obtient la courbe linéaire et verticale précédemment décrite. Pour cela on réalise de préférence le réseau par inversion périodique du coefficient non linéaire (susceptibilité non linéaire d'ordre 2). Cette inversion du coefficient non linéaire peut être obtenue dans plusieurs cristaux ferroélectriques par inversion du sens de la polarisation correspondante. Ainsi dans LiNbO3, on peut utiliser la diffusion de titane, l'application de champs électriques, l'effet pyroélectrique ou bien encore l'insolation avec un faisceau d'électrons. Dans LiTaO3, l'échange protonique permet également de réaliser des variations périodiques de coefficients non linéaires. Dans LiTaO3 on peut également utiliser des techniques telles que l'application de champs électriques, effet pyroélectrique ou insolation par faisceau d'électrons.

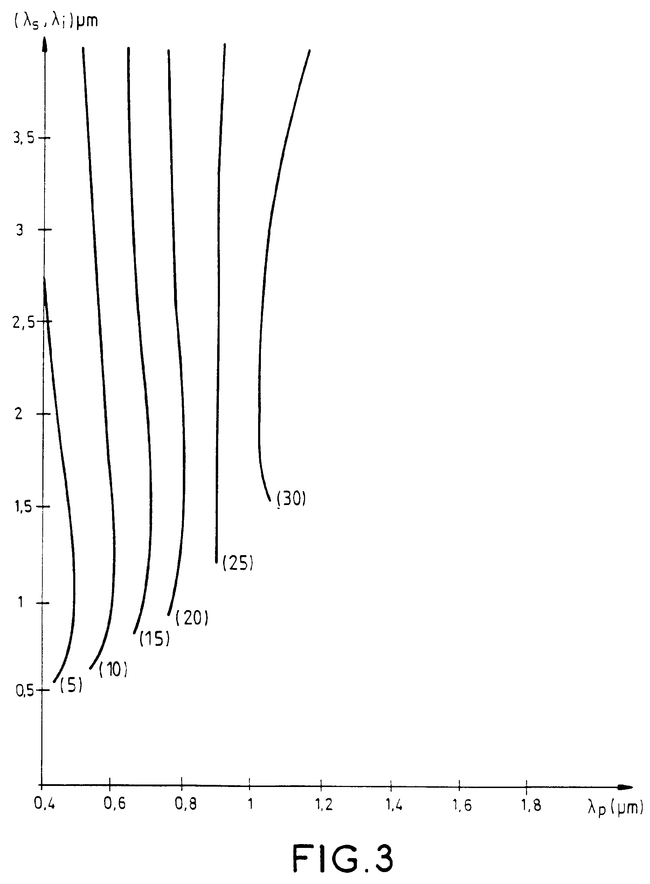

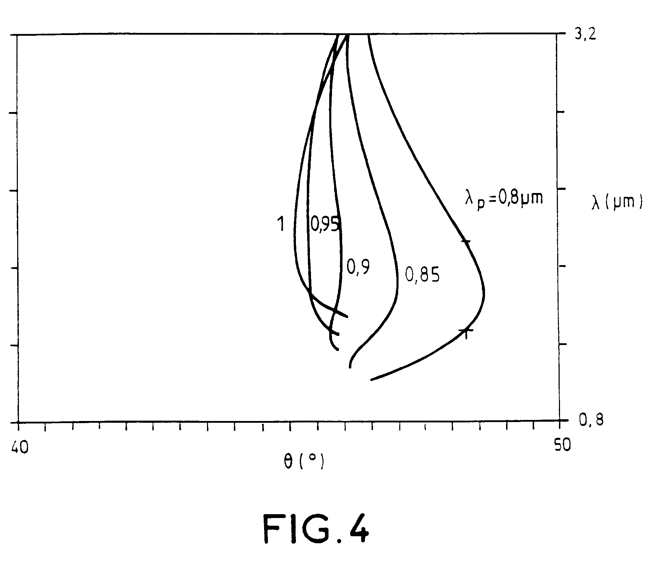

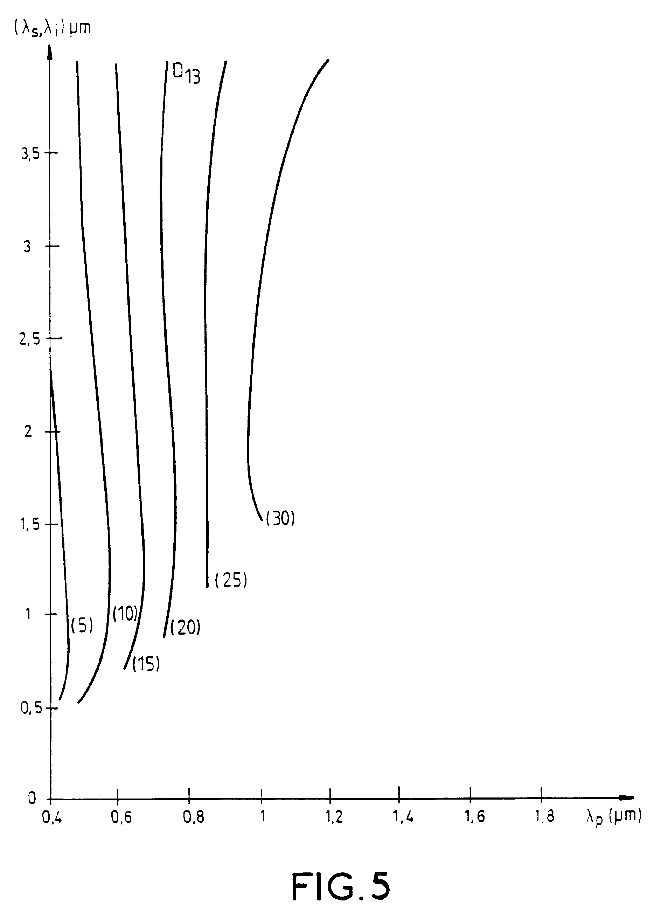

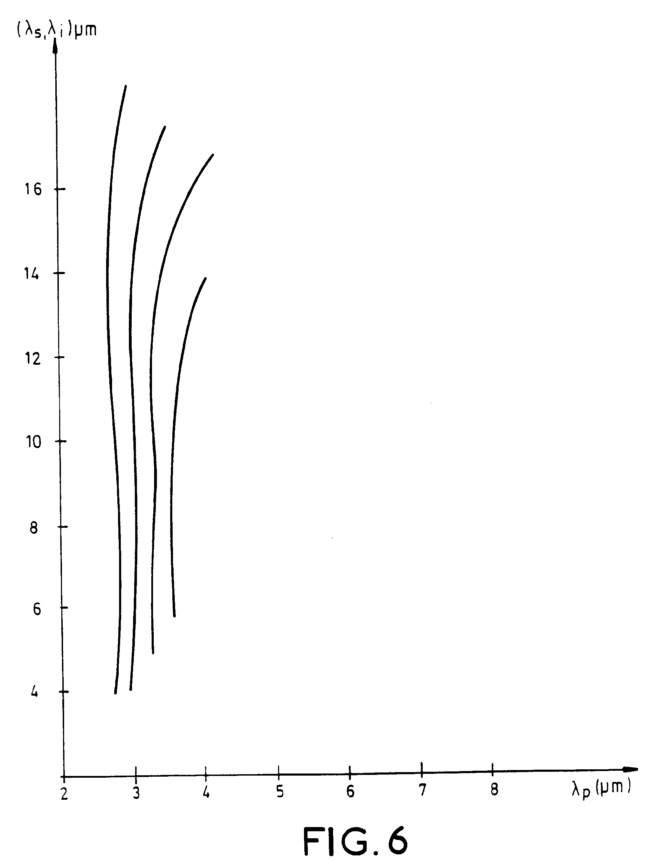

En utilisant comme matériau un cristal de niobate de lithium, pompé optiquement par une onde de longueur d'onde voisine de 1 micron et en inscrivant un réseau dans ce cristal par inversion périodique du coefficient non linéaire dont le pas est voisin de 25 microns on obtient la droite D11 illustrée à la figure 3. On dispose ainsi d'un oscillateur paramétrique optique capable de fonctionner dans la gamme 1-3 microns. Il est également possible en utilisant comme matériau le cristal de niobate de lithium de jouer sur la biréfringence du matériau pour obtenir la condition d'accord de phase sur une gamme élargie en longueurs d'onde. Pour cela on oriente le cristal par rapport à l'axe optique de la cavité selon un angle d'environ 45 degrés et l'on pompe le matériau à 0,95 microns. On obtient une droite D21 qui illustre ce comportement (figure 4). Il est également possible de réaliser un oscillateur paramétrique optique à partir d'un cristal de tantalate de lithium pour fonctionner dans la même gamme de fréquences soit 1-3 microns. En effet comme l'illustre la figure 5, la droite D12 peut être obtenue avec un pas de réseau de l'ordre de 25 microns pour une longueur d'onde de pompe voisine de 1 micron. Si l'on cherche à obtenir un oscillateur paramétrique optique fonctionnant à des longueurs d'ondes plus élevées (au-delà de 4 microns) on peut réaliser un réseau à l'aide de plaquettes d'arséniure de gallium orientées alternativement (de manière à obtenir un réseau de polarisation), le réseau ayant un pas d'environ 140 $\mu$m, chaque plaquette ayant une épaisseur de 70 $\mu$m, chaque plaquette pouvant être fixée sur un support, l'ensemble des plaquettes étant contenu dans deux supports en regard. On obtient un réseau de grande efficacité grâce au fort coefficient non linéaire du matériau GaAs ($d33 \sim 300$ pm/V). La courbe D13 illustre les performances d'un tel matériau dans les conditions physiques citées précédemment. Ainsi en pompant à environ 3 microns le matériau GaAs on est en mesure de générer une onde de puissance sur la gamme étendue 4-18 $\mu$m (figure 6).

Dans un oscillateur paramétrique optique, il est également possible d'utiliser le mécanisme requis dans un amplificateur paramétrique optique soit l'injection dans le matériau (M) d'un signal de faible amplitude accordable qui déclenchera l'oscillation sur la longueur d'onde injectée ou éventuellement sur l'onde "oisive" associée. Le signal de faible amplitude peut par exemple être émis par un laser de type GaInAsP émettant vers 1,5 $\mu$m et dont la longueur d'onde d'émission peut varier électriquement. Il peut encore s'agir d'un laser à sel de plomb dont la longueur d'onde d'émission varie thermiquement.

**Revendications**

1. Oscillateur paramétrique optique comprenant :

   - une cavité résonnante,
   - un milieu optiquement non-linéaire ayant un fort coefficient non-linéaire d'ordre deux, inséré dans ladite cavité résonnante et formant avec cette dernière une structure,
   - des moyens pour illuminer cette structure par une onde de pompe de fréquence angulaire $\omega_p$, de manière à réaliser dans ledit milieu une interaction à trois ondes avec une onde de signal de fréquence angulaire $\omega_s$ et une onde oisive de fréquence angulaire $\omega_i$, les valeurs de fréquence angulaire étant liées par la relation $\omega_p = \omega_s + \omega_i$ ; et les vecteurs d'onde $K_p$, $K_s$ et $K_i$ respectivement associés à l'onde de pompe, à l'onde de signal et à l'onde oisive étant liés par la relation $K_p = K_s + K_i$ caractérisé en ce que

ledit milieu non-linéaire est choisi et orienté par rapport à la direction de l'onde de pompe de façon à respecter pour l'onde de pompe de fréquence angulaire $\omega_p$ l'accord de phase pour une famille de couples d'ondes de signal et d'ondes oisives sur une gamme de longueurs d'onde émises d'une largeur supérieure à environ quelques microns ; et

en ce que l'oscillateur comprend en outre un moyen pour sélectionner une onde de signal d'une longueur d'onde parmi les longueurs d'onde de ladite famille.

2. Amplificateur paramétrique comprenant :

- une cavité résonnante,
- un milieu optiquement non-linéaire ayant un fort coefficient non-linéaire d'ordre deux, inséré dans ladite cavité résonnante et formant avec cette dernière une structure,
- des moyens pour illuminer cette structure par une onde de pompe de fréquence angulaire $\omega_p$ et par une onde signal de faible amplitude de fréquence angulaire $\omega_s$, de manière à amplifier cette onde signal en créant dans ledit milieu une interaction à trois ondes avec une onde oisive de fréquence angulaire $\omega_i$, les valeurs de fréquence angulaire étant liées par la relation $\omega_p = \omega_s + \omega_i$ et les vecteurs d'onde $K_p$, $K_s$ et $K_i$ respectivement associés à l'onde de pompe, à l'onde de signal et à l'onde oisive étant liés par la relation $K_p = K_s + K_i$ caractérisé en ce que :

ledit milieu non-linéaire est choisi et orienté par rapport à la direction de l'onde de pompe de façon à respecter pour l'onde de pompe de fréquence angulaire $\omega_p$ l'accord de phase pour une famille de couples d'ondes de signal et d'ondes oisives sur une gamme de longueurs d'onde émises d'une largeur supérieure à environ quelques microns; et

- les moyens pour illuminer la structure sont aptes à émettre une onde signal de faible amplitude, variable en longueur d'onde.

3. Oscillateur paramétrique optique selon la revendication 1, caractérisé en ce que la structure choisie est un réseau de diffraction de pas $\Lambda$ présentant une variation périodique d'un paramètre optique linéaire ou non-linéaire d'ordre 2 du matériau.

4. Oscillateur paramétrique optique selon la revendication 3, caractérisé en ce que le matériau est le niobate de lithium $LiNbO_3$.

5. Oscillateur paramétrique optique selon la revendication 4, caractérisé en ce que le réseau présente une variation périodique du coefficient non-linéaire de pas $\lambda$ voisin de 25 microns et que la longueur d'onde de pompe $\lambda_{po}$ est voisine de 0,9 micron.

6. Oscillateur paramétrique optique selon la revendication 3, caractérisé en ce que le réseau présente une variation périodique de polarisation et que le matériau est l'arséniure de gallium GaAs.

7. Oscillateur paramétrique optique selon la revendication 6, caractérisé en ce que le pas $\Lambda$ est voisin de 140 microns et que la longueur d'onde de pompe $\lambda_{po}$ est voisine de 3 microns.

8. Oscillateur paramétrique optique selon la revendication 1, caractérisé en ce que le matériau est le niobate de lithium et que la structure est orientée à environ 45 degrés par rapport à la direction de propagation des ondes dans le matériau, la longueur d'onde de pompe $\lambda_{po}$ étant voisine de 0,95 micron.

9. Oscillateur paramétrique optique selon l'une des revendications 1, 3 ou 8, caractérisé en ce que le moyen de sélection de longueur d'onde émise est un filtre accordable en longueur d'onde et commandable électriquement.

10. Oscillateur paramétrique optique selon la revendication 9, caractérisé en ce que le filtre accordable est une cavité Fabry Perot à cristal liquide.

11. Oscillateur paramétrique optique selon la revendication 9, caractérisé en ce que le filtre accordable est un réseau acoustooptique.

12. Amplificateur paramétrique optique selon la revendication 2, caractérisé en ce que le matériau est $LiNbO3$, la structure est un réseau de pas voisin de 25 microns, la longueur d'onde de pompe $\lambda_{po}$ étant voisine de 0,9 micron.

13. Amplificateur paramétrique optique selon la revendication 2, caractérisé en ce que le matériau est GaAs, la structure est un réseau de pas voisin de 140 microns, la longueur d'onde de pompe $\lambda_{po}$ étant voisine de 3 microns.

## Claims

1. Optical parametric oscillator comprising:

    - a resonant cavity,
    - an optically non-linear medium having a high non-linear second-order coefficient, inserted in said resonant cavity and forming a structure with the latter,
    - means for illuminating said structure by a pumping wave of angular frequency $\omega_p$, so as to produce in said medium a three-wave interaction with a signal wave of angular frequency $\omega_s$ and an idle wave of angular frequency $\omega_i$, the angular frequency values being linked by the relation $\omega_p = \omega_s + \omega_i$; and the wave vectors $K_p$, $K_s$ and $K_i$ respectively associated with the pumping wave, the signal wave and the idle wave being linked by the relation $K_p = K_s + K_i$

    characterised in that
    said non-linear medium is chosen and orientated relative to the direction of the pumping wave so as to respect, for the pumping wave of angular frequency $\omega_p$, the phase agreement for a family of pairs of signal waves and of idle waves over a range of transmitted wavelengths having a width greater than approximately a few microns; and that the oscillator furthermore comprises a means for selecting a signal wave of a wavelength from among the wavelengths of said family.

2. Parametric amplifier comprising:

    - a resonant cavity,
    - an optically non-linear medium having a high non-linear second-order coefficient, inserted in said resonant cavity and forming a structure with the latter,
    - means for illuminating said structure by a pumping wave of angular frequency $\omega_p$ and by a small-amplitude signal wave of angular frequency $\omega_s$, so as to amplify said signal wave by creating in said medium a three-wave interaction with an idle wave of angular frequency $\omega_i$, the angular frequency values being linked by the relation $\omega_p = \omega_s + \omega_i$, and the wave vectors $K_p$, $K_s$ and $K_i$ respectively associated with the pumping wave, the signal wave and the idle wave being linked by the relation $K_p = K_s + K_i$

    characterised in that
    said non-linear medium is chosen and orientated relative to the direction of the pumping wave so as to respect, for the pumping wave of angular frequency $\omega_p$, the phase agreement for a family of pairs of signal waves and of idle waves over a range of transmitted wavelengths having a width greater than approximately a few microns; and

    - the means for illuminating the structure are adapted to transmit a small-amplitude signal wave of variable wavelength.

3. Optical parametric oscillator according to claim 1, characterised in that the structure chosen is a diffraction network of steps $\Lambda$ exhibiting a periodic variation of a second-order linear or non-linear optical parameter of the material.

4. Optical parametric oscillator according to claim 3, characterised in that the material is lithium niobate ($LiNbO_3$).

5. Optical parametric oscillator according to claim 4, characterised in that the network exhibits a periodic variation of the non-linear coefficient of steps $\lambda$ of around 25 microns and that the pumping wavelength $\lambda_{po}$ is around 0.9 micron.

6. Optical parametric oscillator according to claim 3, characterised in that the network exhibits a periodic polarisation variation and that the material is gallium arsenide (GaAs).

7. Optical parametric oscillator according to claim 6, characterised in that the step $\Lambda$ is around 140 microns and that the pumping wavelength $\lambda_{po}$ is around 3 microns.

8. Optical parametric oscillator according to claim 1, characterised in that the material is lithium niobate and that the structure is orientated at approximately 45 degrees with respect to the direction of propagation of the waves in the material, the pumping wavelength $\lambda_{po}$ being around 0.95 micron.

9. Optical parametric oscillator according to any of claims 1, 3 or 8, characterised in that the means of selecting the transmitted wavelength is an electrically controllable filter of tunable wavelength.

10. Optical parametric oscillator according to claim 9, characterised in that the tunable filter is a liquid crystal Fabry Perot cavity.

11. Optical parametric oscillator according to claim 9, characterised in that the tunable filter is an acousto-optical network.

12. Optical parametric amplifier according to claim 2, characterised in that the material is $LiNbO_3$, the structure is a network of steps of around 25 microns, and the pumping wavelength $\lambda_{po}$ is around 0.9 micron.

13. Optical parametric amplifier according to claim 2, characterised in that the material is GaAs, the structure is a network of steps of around 140 microns, and the pumping wavelength $\lambda_{po}$ is around 3 microns.

**Patentansprüche**

1. Optischer parametrischer Oszillator, mit:

   - einem Resonanzraum,
   - einem nichtlinearen optischen Medium, das einen großen nichtlinearen Koeffizienten zweiter Ordnung besitzt, in den Resonanzraum eingesetzt ist und mit diesem letzteren eine Struktur bildet,
   - Mitteln zum Beaufschlagen dieser Struktur mit einer Pumpwelle mit Winkelfrequenz $\omega_p$ in der Weise, daß in dem Medium eine Wechselwirkung dreier Wellen mit einer Signalwelle mit Winkelfrequenz $\omega_s$ und einer Passivwelle mit Winkelfrequenz $\omega_i$ verwirklicht wird, wobei die Werte der Winkelfrequenz über der Beziehung $\omega_p = \omega_s + \omega_i$ in Verbindung stehen; und die Wellenvektoren $K_p$, $K_s$ und $K_i$, die der Pumpwelle, der Signalwelle bzw. der Passivwelle zugeordnet sind, über die Beziehung $K_p = K_s + K_i$ zusammenhängen, dadurch gekennzeichnet, daß:

      das nichtlineare Medium in der Weise gewählt und in bezug auf die Richtung der Pumpwelle orientiert ist, daß für die Pumpwelle mit Winkelfrequenz $\omega_p$ die Phasenabstimmung für eine Familie von Paaren aus Signalwellen und Passivwellen in einem Bereich von Wellenlängen, die über eine Breite emittiert werden, die größer als ungefähr einige Mikrometer ist, berücksichtigt wird; und

      daß der Oszillator außerdem ein Mittel zum Wählen einer Signalwelle mit einer Wellenlänge aus den Wellenlängen der Familie enthält.

2. Parametrischer Verstärker, mit:

   - einem Resonanzraum,
   - einem nichtlinearen optischen Medium, das einen großen nichtlinearen Koeffizienten zweiter Ordnung besitzt, in den Resonanzraum eingesetzt ist und mit diesem letzteren eine Struktur bildet,
   - Mitteln zum Beaufschlagen dieser Struktur mit einer Pumpwelle mit Winkelfrequenz $\omega_p$ und mit einer Signalwelle mit geringer Amplitude mit Winkelfrequenz $\omega_s$, derart, daß diese Signalwelle verstärkt wird, indem in dem Medium eine Wechselwirkung dreier Wellen mit einer Passivwelle mit Winkelfrequenz $\omega_i$

erzeugt wird, wobei die Werte der Winkelfrequenz über die Beziehung $\omega_p = \omega_s + \omega_i$ zusammenhängen und die Wellenvektoren $K_p$, $K_s$ und $K_i$, die der Pumpwelle, der Signalwelle bzw. der Passivwelle zugeordnet sind, über die Beziehung $K_p = K_s + K_i$ zusammenhängen, dadurch gekennzeichnet, daß:

   das nichtlineare Medium in der Weise gewählt und in bezug auf die Richtung der Pumpwelle orientiert ist, daß für die Pumpwelle mit Winkelfrequenz $\omega_p$ die Abstimmung der Phase für eine Familie von Paaren von Signalwellen und Passivwellen in einem Bereich von Wellenlängen, die auf einer Breite emittiert werden, die größer als ungefähr einige Mikrometer ist, berücksichtigt wird; und

   die Mittel zum Beaufschlagen der Struktur so beschaffen sind, daß sie eine Signalwelle mit geringer Amplitude und veränderlicher Wellenlänge emittieren können.

3. Optischer parametrischer Oszillator nach Anspruch 1, dadurch gekennzeichnet, daß die gewählte Struktur ein Beugungsgitter mit Schrittweite $\Lambda$ ist, das eine periodische Änderung eines linearen optischen Parameters oder eines nichtlinearen optischen Parameters zweiter Ordnung des Materials aufweist.

4. Optischer Parametrischer Oszillator nach Anspruch 3, dadurch gekennzeichnet, daß das Material Lithiumniobat $LiNbO_3$ ist.

5. Optischer parametrischer Oszillator nach Anspruch 4, dadurch gekennzeichnet, daß das Gitter eine periodische Veränderung des nichtlinearen Koeffizienten mit Schrittweite $\lambda$ in der Umgebung von 25 Mikrometern aufweist und daß die Pumpwellenlänge $\lambda_{po}$ in der Umgebung von 0,9 Mikrometern liegt.

6. Optischer parametrischer Oszillator nach Anspruch 3, dadurch gekennzeichnet, daß das Gitter eine periodische Veränderung der Polarisation aufweist und daß das Material Galliumarsenid GaAs ist.

7. Optischer parametrischer Oszillator nach Anspruch 6, dadurch gekennzeichnet, daß die Schrittweite $\Lambda$ in der Umgebung von 140 Mikrometern liegt und daß die Pumpwellenlänge $\lambda_{po}$ in der Umgebung von 3 Mikrometern liegt.

8. Optischer parametrischer Oszillator nach Anspruch 1, dadurch gekennzeichnet, daß das Material Lithiumniobat ist und daß die Struktur in einem Winkel von ungefähr 45 Grad in bezug auf die Ausbreitungsrichtung der Wellen im Material orientiert ist, wobei die Pumpwellenlänge $\lambda_{po}$ in der Umgebung

von 0,95 Mikrometern liegt.

9. Optischer parametrischer Oszillator nach einem der Ansprüche 1, 3 oder 8, dadurch gekennzeichnet, daß das Mittel zum Wählen der emittierten Wellenlänge ein Filter ist, das in bezug auf die Wellenlänge abstimmbar und elektrisch steuerbar ist.

10. Optischer parametrischer Oszillator nach Anspruch 9, dadurch gekennzeichnet, daß das abstimmbare Filter ein Flüssigkristall-Fabry-Perot-Hohlraum ist.

11. Optischer parametrischer Oszillator nach Anspruch 9, dadurch gekennzeichnet, daß das abstimmbare Filter ein akustooptisches Gitter ist.

12. Optischer parametrischer Verstärker nach Anspruch 2, dadurch gekennzeichnet, daß das Material $LiNbO_3$ ist, die Struktur ein Gitter mit einer Schrittweite in der Umgebung von 25 Mikrometern ist und die Pumpwellenlänge $\lambda_{po}$ in der Umgebung von 0,9 Mikrometern liegt.

13. Optischer parametrischer Verstärker nach Anspruch 2, dadurch gekennzeichnet, daß das Material GaAs ist, die Struktur ein Gitter mit einer Schrittweite in der Umgebung von 140 Mikrometern ist und die Pumpwellenlänge $\lambda_{po}$ in der Umgebung von 3 Mikrometern liegt.

FIG.1

FIG.2

FIG.3

FIG.4

FIG.5

FIG. 6